# EUROPEAN PATENT SPECIFICATION

(11) **EP 4 060 239 B1**
(45) Date of publication and mention of the grant of the patent: **23.07.2025**
(21) Application number: 22162689.8
(22) Date of filing: 17.03.2022
(51) Int. Cl.: F24D 10/00, F28D 9/00

(54) **PLATE-HEAT EXCHANGER, DISTRICT-HEAT HEATING SYSTEM, AND METHOD FOR TRANSFERRING DISTRICT HEAT TO DOMESTIC WATER**
PLATTENWÄRMETAUSCHER, FERNWÄRMEHEIZSYSTEM UND VERFAHREN ZUR ÜBERTRAGUNG VON FERNWÄRME AUF BRAUCHWASSER
ECHANGEUR DE CHALEUR A PLAQUES, SYSTEME DE CHAUFFAGE URBAIN, ET PROCEDE DE TRANSFERT DE LA CHALEUR URBAINE A L'EAU DOMESTIQUE

(30) Priority: 19.03.2021 FI 20215302
(43) Date of publication of application: 21.09.2022
(73) Proprietor: HögforsGST Oy, 79100 Leppävirta (FI)
(72) Inventor: HARTMAN, Antti, 15560 NASTOLA (FI)
(74) Representative: Kespat Oy

(56) References cited:
- EP-A1- 3 088 830
- EP-A1- 3 511 666
- KR-A- 20110 118 317
- KR-B1- 100 651 642
- FINNISH ENERGY: "District heating of buildings, Regulations and guidelines, Publication K1/2023", 9 May 2014 (2014-05-09), pages 29 - 39, XP093248789, Retrieved from the Internet <URL:https://www.oulunenergia.fi/globalassets/images/ala-kayta---01-sivuston-rakenne/palvelumme/lampopalvelut/kaukolampo/kaukolampoon-liittyminen/dh_of_buildings_publicationk1_en.pdf> [retrieved on 20250210]

## Description

The invention relates to a plate heat exchanger, in particular a two-pass plate heat exchanger for domestic water that can be used in an intermediate feed arrangement of a district heating system, wherein the plate heat exchanger has a first side and a second side, and wherein heat-transfer plates form a plate stack to which at least six ports for pipe connections are connected: a district heat inlet port, a hot water port, a hot circuit water port, a district heat return port, a cold water port, an intermediate feed port, and wherein, on the first side, the district heat water is received to heat preheated domestic water and hot circuit water and, on the second side, the district heat water is received to preheat cold domestic water. The invention also relates to a district-heat heating system and to a method for transferring district heat to a heating system and domestic water.

The publication "District heating of buildings, regulations and guidelines K1/2013" of the Finnish Energy Industry Assoc. describes alternative district heat connections and their recommended areas of application. An intermediate feed arrangement, i.e. 2-step connection, is recommended for buildings in which the temperature of the district heat water returning from a heat exchanger of a heating circuit or ventilation system can be utilized in a heat exchanger for domestic water in order to improve cooling. Without an intermediate feed, the cooling of the district heat water remains poor, since the domestic water returning at a temperature of approximately 55 °C from the hot circuit water pipe is conducted into the cold water pipe before the heat exchanger. When an intermediate feed arrangement is used, the cooling of the district heat water is always better in operating situations in which hot domestic water is used in the building.

The domestic-water heat exchanger employed is typically a two-pass plate heat exchanger comprising patterned metal plates with a large surface area for transferring heat from one fluid to another. In a two-pass plate heat exchanger, the length of the heat-transfer surface is double that of a one-pass plate heat exchanger of corresponding physical dimensions. A two-pass plate heat exchanger allows the return water of the domestic water circuit to be conducted to the middle of the domestic-water heat exchanger. The temperature of hot domestic water can also be controlled easier and better when a two-pass plate heat exchanger is used. When a two-pass domestic-water heat exchanger is used, the district heat water returning from a heat exchanger of a heating circuit can also be guided so as to preheat cold domestic water.

There is, however, an obvious problem with the two-pass domestic-water plate heat exchangers according to the prior art in situations where the temperature of the district heat water returning from the heating circuit is low. If the temperature of the district heat water returning from the heating circuit is lower than the temperature of the return water of the domestic water circuit, then the heat transfer occurs in the wrong direction. The energy of the return water of the domestic water circuit is thus transferred to the return water of the district heating system. The problem is more pronounced at low temperatures of a heating network. An intermediate feed arrangement is thus generally not possible, in particular in new buildings.

When the temperature of the district heat water returning from a heating circuit is low, below 40 °C even in a design situation, it is currently not utilized in a preheating of domestic water. In this case, the relevant port of the domestic-water heat exchanger is plugged and the district heat water returning from a heat exchanger of the heating circuit is guided directly to the return pipe for district heat.

A two-pass plate heat exchanger according to the prior art is disclosed in the patent document KR 101109718 B1. Another plate heat exchanger according to the prior art is disclosed in the patent document WO 2019081994 A1. The plate heat exchangers in question exhibit the above-mentioned problem so that they are not suitable for using district heat water returning from a low-temperature heating circuit in an intermediate feed arrangement.

Patent document EP 3 088 830 A1 discloses a plate heat exchanger wherein heat is transferred from first fluid to second fluid and to third fluid, wherein the first fluid flows through the whole plate stack and the second fluid flows only on the first side of the plate heat exchanger and the second fluid flows only on the second side of the plate heat exchanger. The plate heat exchanger exhibits the same problem as above of transferring heat to wrong direction to the first fluid in certain conditions if the plate heat exchanger would be modified to be used as a two-pass domestic-water plate heat exchanger for an intermediate feed arrangement of a district heating system.

It is an object of the invention to provide an improved plate heat exchanger with which the transfer of district heat to domestic water can be rendered more efficient and low-temperature district heat water returning from a heating circuit can be utilized for a preheating of domestic water. The characteristic features of this invention are indicated in the attached patent claim 1. A further object of the invention is to provide an improved district-heat heating system. The characteristic features of this invention are indicated in the attached patent claim 4.

A further object of the invention is to provide an improved method for transferring district heat to domestic water. The characteristic features of this invention are indicated in the attached patent claim 7.

A plate heat exchanger according to the invention is a two-pass domestic-water plate heat exchanger that can be used in an intermediate feed arrangement of a district heating system, wherein the plate heat exchanger has a first side and a second side, wherein heat-transfer plates form a plate stack to which at least six ports for pipe connections are connected: a district heat inlet port, a hot water port, a hot circuit water port, a district heat return port, a cold water port, an intermediate feed port, and wherein, on the first side, the district heat water is received to heat preheated domestic water and hot circuit water and, on the second side, the district heat water is received to preheat cold domestic water. The intermediate feed port is located on the opposite side of the plate stack of the plate heat exchanger relative to the hot circuit water port, and the intermediate feed water is received to preheat cold district heat water on the second side of the plate heat exchanger only.

This precludes a heat transfer in the wrong direction because the hot circuit water only flows on the first side of the plate heat exchanger and the intermediate feed flow only flows on the second side of the plate heat exchanger so that it is not possible for heat to be transferred from the hot circuit water to the intermediate feed flow. The preheating capability of the plate heat exchanger is simultaneously improved. The use of a two-pass domestic-water plate heat exchanger clearly improves the capability of a building to cool district heat water, which benefits both the heat consumer and the heat provider. As a result of the plate heat exchanger according to the invention, the average flow rate of the district heat water is decreased, pumping costs of the network are reduced, transfer capacity is increased, inlet temperatures can be lowered, heat losses are reduced, the yield of flue-gas scrubbers is increased, the output of cogeneration increases and the operating efficiency of industrial heat pump facilities is improved. Depending on the pricing model for district heat, the solution generates savings in the basic charge for district heat and, in some districts, helps to achieve the overall cooling required to qualify for a cooling rebate.

Preferably, the plate heat exchanger has six ports for pipe connections. The plate heat exchanger can thus be used in a typical intermediate feed arrangement without any redundant ports.

According to the invention a first end plate is provided on the first side of the plate heat exchanger and a second end plate is provided on the, relative to the first end plate, opposite second side of the plate heat exchanger, and the district heat inlet port, the hot water port and the hot circuit water port are located in the first end plate and the district heat return port, the cold water port and the intermediate feed port are located in the second end plate. This facilitates an efficient transfer of the district heat to the domestic water.

Preferably, the heat-transfer plates are made of metal and are brazed or welded together. This facilitates an efficient heat transfer between fluids as well as a compact, robust and small-sized structure of the plate heat exchanger.

The district-heat heating system according to the invention includes a primary district heat loop comprising at least a two-pass domestic-water plate heat exchanger and a heat exchanger of a heating circuit, wherein returning hot circuit water is connected to the domestic-water plate heat exchanger between the cold water port and the hot water port and the return of the district heat water of the heat exchanger of the heating circuit is connected to the domestic-water plate heat exchanger in order to preheat domestic water by means of the intermediate feed arrangement, and a heating loop which circulates the circuit water in a controllable manner in the points of consumption via the heat exchanger of the heating circuit. The domestic-water plate heat exchanger can be any plate heat exchanger described in the foregoing. This way, the low-temperature district heat water returning from the heat exchanger of the heating circuit can be utilized to preheat the domestic water without a heat transfer occurring in the wrong direction in the domestic-water heat exchanger.

Preferably, the outlet temperature of the heat exchanger of the heating circuit is 25 - 40 °C during most of the heating season. A heat transfer from low-temperature district heat water to domestic water is thus rendered possible by means of the plate heat exchanger according to the invention.

Preferably, the district-heat heating system according to the invention further includes a second heat exchanger in the heating circuit and a second heating loop which circulates circuit water in a controllable manner in the points of consumption via the heat exchanger of the second heating circuit, and the district heat water return of the heat exchanger of the second heating circuit is also connected to the domestic-water plate heat exchanger in order to preheat the domestic water by means of the intermediate feed arrangement. The first heating loop can be, for example, a floor heating loop and the second heating loop can be, for example, a radiator network or a ventilation loop. By means of the plate heat exchanger according to the invention, the water returning from all heat exchangers of the heating circuit of the system can be utilized for heating the domestic water, the return flow of the heat exchangers of the heating circuit permitting.

In the method according to the invention for transferring district heat to a heating system and domestic water, a two-pass domestic-water plate heat exchanger that can be used in an intermediate feed arrangement is used for the heat transfer, wherein the plate heat exchanger has a first side and a second side and comprises a plate stack formed by heat-transfer plates and at least six ports for pipe connections connected thereto: a district heat inlet port, a hot water port, a hot circuit water port, a district heat return port, a cold water port, an intermediate feed port, and the water flowing from the district heat inlet port is conducted in a first pass in a direction opposite to the direction of flow of water from the hot circuit water port, after which the district heat water is conducted in a second pass in a direction opposite to the direction of flow of water from the cold water port, and the intermediate feed is fed via the intermediate feed port to a point after the first pass. The intermediate feed flow is conducted into the plate heat exchanger on the opposite side of the plate pack relative to the hot circuit water port, and the intermediate feed flow only releases heat to the domestic water on the second side of the plate heat exchanger. This precludes the possibility of a heat transfer occurring from the return water of the domestic water circuit to the district heat return water of the heating circuit; instead, the heat of the district heat return water of the heating system is used effectively to preheat the cold domestic water.

Preferably, the district heat water is conducted into the intermediate feed port from a heat exchanger of a low-temperature heating circuit, wherein the outlet temperature of said heat exchanger is 25 - 40 °C during most of the heating season. This allows the heat of the low-temperature district heat water to be transferred to the domestic water.

The invention is illustrated in the following in detail with reference to the attached drawings illustrating embodiments of the invention, wherein
- Figure 1: shows a technical diagram of a plate heat exchanger according to the invention,
- Figure 2: shows a schematic arrangement of a use of a plate heat exchanger according to the invention as a domestic-water heat exchanger,
- Figure 3: shows a schematic illustration of a plate heat exchanger according to the invention,
- Figure 4: shows an exploded view of a plate heat exchanger according to the invention.

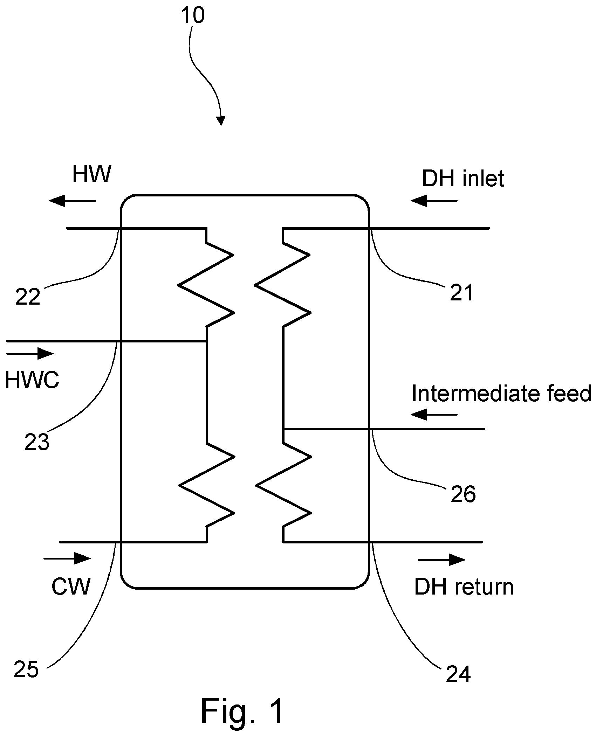

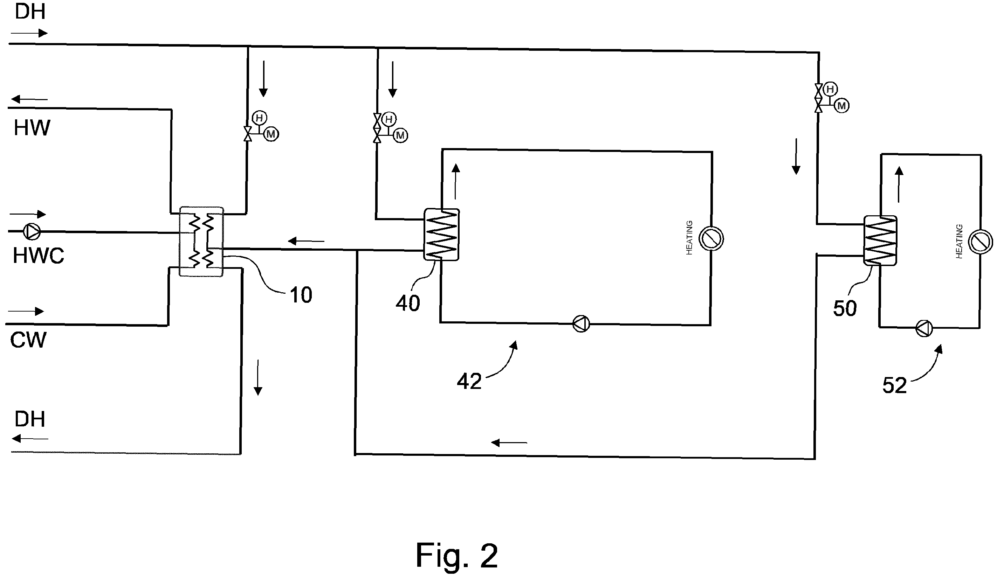

Figure 1 shows a technical diagram of a two-pass plate heat exchanger 10 according to the invention. Figure 2 shows a schematic arrangement illustrating a use of a plate heat exchanger 10 according to the invention for transferring heat from district heat water to domestic water in a district-heat heating system according to the invention. The plate heat exchanger 10 according to the invention is suitable for use as a domestic-water plate heat exchanger 10 in an intermediate feed arrangement, wherein the district heat return water of a heat exchanger 40 of a heating circuit is guided to the domestic-water plate heat exchanger 10 in order to preheat the domestic water.

The heating loop 42 illustrated in Figure 2, to which heat is transferred from the district heat water by means of the heat exchanger 40 of the heating circuit, can be, for example, a floor heating loop. A second heating loop 52, to which heat is transferred from the district heat water by means of a second heat exchanger 50 of the heating circuit, can be, for example, a radiator network or a ventilation loop. When the plate heat exchanger 10 according to the invention is used for transferring heat from the district heat water to the domestic water, the water returning from all heat exchangers 40, 50 of the heating circuit of the system can be conducted to the intermediate feed port 26 of the plate heat exchanger 10. If, however, the return water flow of the heating circuit is so large that the plate heat exchanger 10 is not able to handle it, the return flow, for example from the second heat exchanger 50 of the heating circuit, can be routed directly to the district heat DH return either entirely or partially, which requires dedicated piping from the second heat exchanger 50 of the heating circuit directly to the district heat DH return.

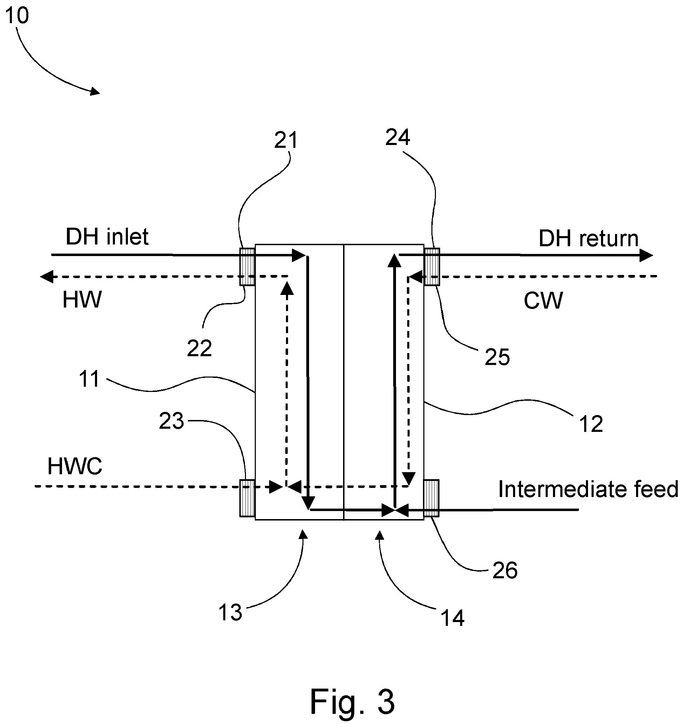

The plate heat exchanger 10 according to the invention illustrated in Figure 3 has a total of six ports:
- a district heat inlet port 21, by which hot district heat DH is conducted into the plate heat exchanger 10,
- a hot water port 22, by which hot water HW is conducted out of the plate heat exchanger 10,
- a hot circuit water port 23, by which hot circuit water HWC returning from the domestic water circuit is conducted into the plate heat exchanger 10,
- a district heat return port 24, by which cooled district heat DH is conducted out of the plate heat exchanger 10,
- a cold water port 25, by which cold water CW is conducted into the plate heat exchanger 10,
- an intermediate feed port 26, by which the district heat DH return water of the heating circuit is conducted into the plate heat exchanger 10.

The plate heat exchanger 10 according to the invention illustrated in Figure 3 has a first end plate 11 and a second end plate 12 on the opposite side of the plate heat exchanger 10 relative to the first end plate 11, wherein each end plate 11, 12 comprises three ports. The intermediate feed port 26 is located on the opposite side of the plate heat exchanger 10 relative to the hot circuit water port 23. The district heat inlet port 21, the hot water port 22 and the hot circuit water port 23 are located in the first end plate 11 of the plate heat exchanger 10. The district heat return port 24, the cold water port 25 and the intermediate feed port 26 are located in the second end plate 12 of the plate heat exchanger 10.

Typical inlet and outlet temperatures for a plate heat exchanger 10 are, for example:
- district heat DH inlet, district heat inlet port 21: 90 °C,
- hot water HW, hot water port 22: 58 °C,
- hot circuit water HWC, hot circuit water port 23: 55 °C,
- district heat DH return, district heat return port 24: 20 °C,
- cold water CW, cold water port 25: 10 °C,
- district heat return water of the heating circuit, intermediate feed port 26: 40 °C.

In the area of application of the plate heat exchanger 10 according to the invention, the temperature of the district heat return water of the heating circuit entering the plate heat exchanger 10 is thus lower than the temperature of the hot circuit water HWC entering the plate heat exchanger 10. Since the intermediate feed port 26 is arranged in the second end plate 12 of the plate heat exchanger 10, the heat of the hot circuit water HWC cannot be transferred to the district heat return water of the heating circuit. However, the plate heat exchanger 10 according to the invention also works well in situations where the temperature of the water entering the intermediate feed port 26 is higher than that of the water entering the hot circuit water port 23.

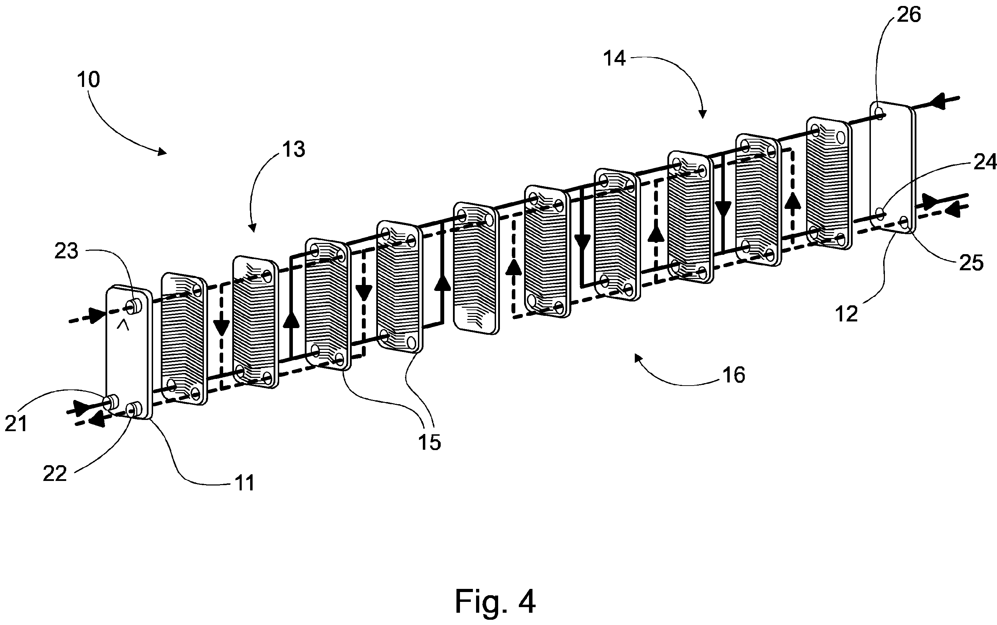

Figure 4 shows an exploded view of a plate heat exchanger 10 according to the invention. Provided between the first end plate 11 and the second end plate 12 of the plate heat exchanger 10 are heat-transfer plates 15 by means of which heat is transferred between the fluids. The heat-transfer plates 15 are made of metal and are brazed or welded together, thus forming a plate stack 16. Figure 4 shows a plate heat exchanger 10 in an exploded view illustrating the flow channels of the fluids inside the plate heat exchanger 10. Inside the plate heat exchanger 10, the district heat water is received so as to flow in a direction counter to that of the domestic water. In contrast to the prior art, the intermediate feed port 26 is located on the opposite side of the plate stack 16 of the plate heat exchanger 10 relative to the hot circuit water port 23. In the plate heat exchanger 10 according to the invention, the intermediate feed water only circulates on the second side 14 of the plate heat exchanger 10 while, in the solutions according to the prior art, the intermediate feed flow passes through the entire plate stack. In the plate heat exchanger 10 according to the invention, the flow of the hot circuit water HWC only occurs on the first side of the plate heat exchanger 10, which precludes a transfer of heat from the hot circuit water HWC to the intermediate feed flow.

## Claims

1. A plate heat exchanger (10), which is a two-pass domestic-water plate heat exchanger (10) for an intermediate feed arrangement of a district heating system, wherein the heat exchanger (10) has a first side (13) and a second side (14), and wherein heat-transfer plates (15) form a plate stack (16), and wherein a first end plate (11) is provided on the first side (13) of the plate heat exchanger (10) and a second end plate (12) is provided on the, relative to the first end plate (11), opposite second side (14) of the plate heat exchanger (10), to which plate stack (16) at least six ports for pipe connections are connected:
- a district heat inlet port (21), by which hot district heat (DH) is conducted into the plate heat exchanger (10), located on the first end plate (11),
- a hot water port (22), by which hot water (HW) is conducted out of the plate heat exchanger (10), located on the first end plate (11),
- a hot circuit water port (23), by which hot circuit water (HWC) returning from the domestic water circuit is conducted into the plate heat exchanger (10), located on the first end plate (11),
- a district heat return port (24), by which cooled district heat (DH) is conducted out of the plate heat exchanger (10), located on the second end plate (12),
- a cold water port (25), by which cold water (CW) is conducted into the plate heat exchanger (10), located on the second end plate (12),
- an intermediate feed port (26), by which the district heat (DH) return water of the heating circuit is conducted into the plate heat exchanger (10),
and wherein, on the first side (13), the district heat water is received from the district heat inlet port (21) to heat preheated domestic water received from the second side (14) and hot circuit water received from the hot circuit water port (23) and, on the second side (14), the district heat water is received from the first side (13) to preheat cold domestic water received from the cold water port (25), wherein
the intermediate feed port (26) is located on the second end plate (12) on the opposite side of the plate stack (16) of the plate heat exchanger (10) relative to the hot circuit water port (23), and the intermediate feed water is received from the intermediate feed port (26) to preheat cold district heat water received from the cold water port (25) only on said second side (14) of the plate heat exchanger (10).

2. The plate heat exchanger (10) according to claim 1, **characterized in that** the plate heat exchanger (10) comprises six ports for pipe connections.

3. The plate heat exchanger (10) according to any of claims 1-2, **characterized in that** the heat-transfer plates (15) are made of metal and are brazed or welded together.

4. A district heat heating system, which includes
- a primary district heat loop comprising at least a two-pass domestic-water plate heat exchanger (10) and a heat exchanger (40) of a heating circuit, wherein the returning hot circuit water (HWC) is connected to the domestic-water plate heat exchanger (10) between the cold water (CW) port and the hot water (HW) port and the return of the district heat water of the heat exchanger (40) of the heating circuit is connected to the domestic-water plate heat exchanger (10) in order to preheat domestic water by means of the intermediate feed arrangement, and
- a heating loop (42) which circulates the circuit water in a controllable manner in the points of consumption via the heat exchanger (40) of the heating circuit,
**characterized in that** the domestic-water plate heat exchanger (10) is a plate heat exchanger (10) according to any of claims 1-3.

5. The district-heat heating system according to claim 4, **characterized in that** the outlet temperature of the heat exchanger (40) of the heating circuit is 25 - 40 °C during most of the heating season.

6. The district-heat heating system according to claim 4 or 5, **characterized in that** the district-heat heating system further includes a second heat exchanger (50) in the heating circuit and a second heating loop (52) which circulates circuit water in a controllable manner in the points of consumption via the second heat exchanger (50) of the heating circuit, and the district heat water return of the second heat exchanger (50) of the heating circuit is also connected to the domestic-water plate heat exchanger (10) in order to preheat the domestic water by means of the intermediate feed arrangement.

7. A method for transferring district heat to a heating system and domestic water, in which method a two-pass domestic water plate heat exchanger (10) that can be used in an intermediate feed arrangement is used for the heat transfer, wherein the plate heat exchanger (10) has a first side (13) and a second side (14) and comprises a plate stack (16) formed by heat-transfer plates (15) and at least six ports for pipe connections connected thereto:
- a district heat inlet port (21),
- a hot water port (22),
- a hot circuit water port (23),
- a district heat return port (24),
- a cold water port (25),
- an intermediate feed port (26),
and wherein the water flowing from the district heat inlet port (21) is conducted in a first pass in a direction opposite to the direction of flow of water from the hot circuit water port (23), after which the district heat water is conducted in a second pass in a direction opposite to the direction of flow of water from the cold water port (25), and wherein the intermediate feed is fed via the intermediate feed port (26) to a point after the first pass,
wherein the intermediate feed flow is conducted into the plate heat exchanger (10) on the opposite side of the plate stack (16) relative to the hot water port (23), and the intermediate feed flow only releases heat to the domestic water on the second side (14) of the plate heat exchanger (10).

8. The method according to claim 7, **characterized in that** the district heat water is conducted into the intermediate feed port (26) from a heat exchanger (40, 50) of a low-temperature heating circuit, wherein the heat exchanger (40, 50) has an outlet temperature of 25 - 40 °C during most of the heating season.

## Patentansprüche

1. Plattenwärmetauscher (10), der ein Brauchwasser-Plattenwärmetauscher (10) mit zwei Durchgängen für eine Zwischeneinspeiseanordnung eines Fernheizsystems ist, wobei der Wärmetauscher (10) eine erste Seite (13) und eine zweite Seite (14) aufweist, und wobei Wärmeübertragungsplatten (15) einen Plattenstapel (16) bilden, und wobei an der ersten Seite (13) des Plattenwärmetauschers (10) eine erste Endplatte (11) und an der der ersten Endplatte (11) gegenüberliegenden zweiten Seite (14) des Plattenwärmetauschers (10) eine zweite Endplatte (12) bereitgestellt ist, an die der Plattenstapel (16) mit mindestens sechs Anschlüssen für Leitungsverbindungen angeschlossen ist:
- einen Fernwärmeeinlassanschluss (21), durch den heiße Fernwärme (DH) in den Plattenwärmetauscher (10) geleitet wird, der sich an der ersten Endplatte (11) befindet,
- einen Heißwasseranschluss (22), über den Heißwasser (HW) aus dem Plattenwärmetauscher (10), der sich an der ersten Endplatte (11) befindet, herausgeführt wird,
- einen Heißwasserkreislaufanschluss (23), über den das aus dem Brauchwasserkreislauf rücklaufende Heißwasser (HWC) in den Plattenwärmetauscher (10) geleitet wird, der sich auf der ersten Endplatte (11) befindet,
- einen Fernwärmerücklaufanschluss (24), über den abgekühlte Fernwärme (DH) aus dem Plattenwärmetauscher (10) herausgeführt wird, der sich an der zweiten Endplatte (12) befindet,
- einen Kaltwasseranschluss (25), durch den Kaltwasser (CW) in den Plattenwärmetauscher (10) geleitet wird, der sich an der zweiten Endplatte (12) befindet,
- einen Zwischeneinspeiseanschluss (26), über den das Fernwärme (DH)-Rücklaufwasser des Heizkreises in den Plattenwärmetauscher (10) geleitet wird,
und wobei auf der ersten Seite (13) das Fernwärmewasser von dem Fernwärmeeinlassanschluss (21) empfangen wird, um von der zweiten Seite (14) empfangenes vorgewärmtes Brauchwasser und von dem Heißwasserkreisanschluss (23) empfangenes Heißwasser zu erwärmen, und auf der zweiten Seite (14) das Fernwärmewasser von der ersten Seite (13) empfangen wird, um von dem Kaltwasseranschluss (25) empfangenes kaltes Brauchwasser vorzuwärmen, wobei der Zwischeneinspeiseanschluss (26) an der zweiten Endplatte (12) auf der gegenüberliegenden Seite des Plattenstapels (16) des Plattenwärmetauschers (10) in Bezug auf den Heißwasserkreisanschluss (23) angeordnet ist und das Zwischeneinspeisewasser von dem Zwischeneinspeiseanschluss (26) aufgenommen wird, um kaltes Fernwärmewasser vorzuwärmen, das von dem Kaltwasseranschluss (25) nur auf der zweiten Seite (14) des Plattenwärmetauschers (10) aufgenommen wird.

2. Plattenwärmetauscher (10) nach Anspruch 1, **dadurch gekennzeichnet, dass** der Plattenwärmetauscher (10) sechs Anschlüsse für Leitungsverbindungen umfasst.

3. Plattenwärmetauscher (10) nach einem der Ansprüche 1 bis 2, **dadurch gekennzeichnet, dass** die Wärmeübertragungsplatten (15) aus Metall bestehen und miteinander verlötet oder verschweißt sind.

4. Fernwärmeheizsystem, das einen
- primären Fernwärmekreislauf einschließt, der mindestens einen Brauchwasser-Plattenwärmetauscher (10) mit zwei Durchgängen und einen Wärmetauscher (40) eines Heizkreises umfasst, wobei das rücklaufende Heißwasser (HWC) mit dem Brauchwasser-Plattenwärmetauscher (10) zwischen dem Kaltwasseranschluss (CW) und dem Heißwasseranschluss (HW) verbunden ist und der Rücklauf des Fernwärmewassers des Wärmetauschers (40) des Heizkreises mit dem Brauchwasser-Plattenwärmetauscher (10) verbunden ist, um mittels der Zwischeneinspeiseanordnung Brauchwasser vorzuwärmen, und
- eine Heizschleife (42), die das Brauchwasser in den Verbrauchsstellen über den Wärmetauscher (40) des Heizkreises regelbar umwälzt,
**dadurch gekennzeichnet, dass** der Brauchwasser-Plattenwärmetauscher (10) ein Plattenwärmetauscher (10) nach einem der Ansprüche 1 bis 3 ist.

5. Fernwärmeheizsystem nach Anspruch 4, **dadurch gekennzeichnet, dass** die Austrittstemperatur des Wärmetauschers (40) des Heizkreises während des größten Teils der Heizperiode 25 bis 40 °C beträgt.

6. Fernwärmeheizsystem nach Anspruch 4 oder 5, **dadurch gekennzeichnet, dass** das Fernwärmeheizsystem ferner einen zweiten Wärmetauscher (50) im Heizkreis und eine zweite Heizschleife (52) einschließt, die über den zweiten Wärmetauscher (50) des Heizkreises Kreislaufwasser in den Verbrauchsstellen regelbar umwälzt, und der Fernwärmewasserrücklauf des zweiten Wärmetauschers (50) des Heizkreises auch an den Brauchwasser-Plattenwärmetauscher (10) angeschlossen ist, um das Brauchwasser über die Zwischeneinspeiseanordnung vorzuwärmen.

7. Verfahren zur Übertragung von Fernwärme auf ein Fernheizsystem und Brauchwasser, wobei zur Wärmeübertragung ein in einer Zwischeneinspeiseanordnung einsetzbarer Brauchwasser-Plattenwärmetauscher (10) mit zwei Durchgängen verwendet wird, wobei der Plattenwärmetauscher (10) eine erste Seite (13) und eine zweite Seite (14) aufweist und einen von Wärmeübertragungsplatten (15) gebildeten Plattenstapel (16) und mindestens sechs Anschlüsse für daran angeschlossene Leitungsverbindungen umfasst:
- einen Fernwärmeeinlassanschluss (21),
- einen Heißwasseranschluss (22),
- einen Heißwasserkreislaufanschluss (23),
- einen Fernwärmerücklaufanschluss (24),
- einen Kaltwasseranschluss (25),
- einen Zwischeneinspeiseanschluss (26),
und wobei das aus dem Fernwärmeeinlassanschluss (21) strömende Wasser in einem ersten Durchgang in einer Richtung gegenüberliegend zur Strömungsrichtung des Wassers aus dem Heißwasserkreislaufanschluss (23) geleitet wird, wonach das Fernwärmewasser in einem zweiten Durchgang in einer Richtung gegenüberliegend zur Strömungsrichtung des Wassers aus dem Kaltwasseranschluss (25) geleitet wird, und wobei die Zwischeneinspeisung über den Zwischeneinspeiseanschluss (26) zu einem Punkt nach dem ersten Durchgang zugeführt wird,
wobei der Zwischeneinspeisestrom in den Plattenwärmetauscher (10) auf der dem Heißwasseranschluss (23) gegenüberliegenden Seite des Plattenstapels (16) eingeleitet wird, und der Zwischeneinspeisestrom nur auf der zweiten Seite (14) des Plattenwärmetauschers (10) Wärme an das Brauchwasser abgibt.

8. Verfahren nach Anspruch 7, **dadurch gekennzeichnet, dass** das Fernwärmewasser aus einem Wärmetauscher (40, 50) eines Niedertemperatur-Heizkreises in den Zwischeneinspeiseanschluss (26) geleitet wird, wobei der Wärmetauscher (40, 50) während des größten Teils der Heizperiode eine Austrittstemperatur von 25 bis 40 °C aufweist.

## Revendications

1. Échangeur de chaleur à plaques (10), à savoir échangeur de chaleur à plaques (10) pour l'eau domestique à deux parcours pour un dispositif d'alimentation intermédiaire d'un système de chauffage urbain, dans lequel l'échangeur de chaleur (10) a un premier côté (13) et un deuxième côté (14), et dans lequel les plaques de transfert de chaleur (15) forment une pile de plaques (16), et dans lequel une première plaque d'extrémité (11) se trouve sur le premier côté (13) de l'échangeur de chaleur à plaques (10) et une deuxième plaque d'extrémité (12) se trouve sur le deuxième côté opposé (14) de l'échangeur de chaleur à plaques (10) par rapport à la première plaque d'extrémité (11), au moins six orifices pour les raccordements de tuyaux étant raccordés à ladite pile de plaques (16) :
- un orifice d'entrée de la chaleur urbaine (21), par lequel la chaleur urbaine (DH) chaude est conduite dans l'échangeur de chaleur à plaques (10), situé sur la première plaque d'extrémité (11),
- un orifice d'eau chaude (22), par lequel l'eau chaude (HW) est évacuée de l'échangeur de chaleur à plaques (10), situé sur la première plaque d'extrémité (11),
- un orifice pour l'eau du circuit chaud (23), par lequel l'eau du circuit chaud (HWC) provenant du circuit d'eau domestique est acheminée dans l'échangeur de chaleur à plaques (10), situé sur la première plaque d'extrémité (11),
- un orifice de retour de la chaleur urbaine (24), par lequel la chaleur urbaine (DH) refroidie est évacuée de l'échangeur de chaleur à plaques (10), situé sur la deuxième plaque d'extrémité (12),
- un orifice d'eau froide (25), par lequel l'eau froide (CW) est acheminée dans l'échangeur de chaleur à plaques (10), situé sur la deuxième plaque d'extrémité (12),
- un orifice d'alimentation intermédiaire (26), par lequel l'eau de retour de la chaleur urbaine (DH) du circuit de chauffage est acheminée dans l'échangeur de chaleur à plaques (10),
et dans lequel, sur le premier côté (13), l'eau de la chaleur urbaine est reçue de l'orifice d'entrée de la chaleur urbaine (21) pour chauffer l'eau domestique préchauffée reçue du deuxième côté (14) et l'eau du circuit chaud reçue de l'orifice pour l'eau du circuit chaud (23) et, sur le deuxième côté (14), l'eau de la chaleur urbaine est reçue du premier côté (13) pour préchauffer l'eau domestique froide reçue de l'orifice d'eau froide (25), dans lequel l'orifice d'alimentation intermédiaire (26) est situé sur la deuxième plaque d'extrémité (12) du côté opposé à la pile de plaques (16) de l'échangeur de chaleur à plaques (10) par rapport à l'orifice pour l'eau du circuit chaud (23), et l'eau d'alimentation intermédiaire est reçue de l'orifice d'alimentation intermédiaire (26) pour préchauffer l'eau froide de la chaleur urbaine reçue de l'orifice d'eau froide (25) uniquement sur ledit deuxième côté (14) de l'échangeur de chaleur à plaques (10).

2. Échangeur de chaleur à plaques (10) conformément à la revendication 1, **caractérisé en ce que** l'échangeur de chaleur à plaques (10) comprend six orifices pour les raccordements de tuyaux.

3. Échangeur de chaleur à plaques (10) conformément à l'une quelconque des revendications 1 et 2, **caractérisé en ce que** les plaques de transfert de chaleur (15) sont en métal et sont brasées ou soudées ensemble.

4. Système de chauffage urbain, comprenant
- une boucle principale de chaleur urbaine comprenant au moins un échangeur de chaleur à plaques pour l'eau domestique à deux parcours (10) et un échangeur de chaleur (40) d'un circuit de chauffage, dans laquelle l'eau du circuit chaud (HWC) de retour est reliée à l'échangeur de chaleur à plaques pour l'eau domestique (10) entre l'orifice d'eau froide (CW) et l'orifice d'eau chaude (HW), et le retour de l'eau de la chaleur urbaine de l'échangeur de chaleur (40) du circuit de chauffage est relié à l'échangeur de chaleur à plaques pour l'eau domestique (10) afin de préchauffer l'eau domestique au moyen d'un dispositif d'alimentation intermédiaire, et
- une boucle de chauffage (42) qui fait circuler l'eau du circuit de manière contrôlable aux points de consommation via l'échangeur de chaleur (40) du circuit de chauffage,
**caractérisé en ce que** l'échangeur de chaleur à plaques (10) pour l'eau domestique est un échangeur de chaleur à plaques (10) conformément à l'une quelconque des revendications 1 à 3.

5. Système de chauffage par la chaleur urbaine conformément à la revendication 4, **caractérisé en ce que** la température de sortie de l'échangeur de chaleur (40) du circuit de chauffage est comprise entre 25 °C et 40 °C pendant la majeure partie de la saison de chauffage.

6. Système de chauffage par la chaleur urbaine conformément à la revendication 4 ou 5, **caractérisé en ce que** le système de chauffage par la chaleur urbaine comprend en outre un deuxième échangeur de chaleur (50) dans le circuit de chauffage et une deuxième boucle de chauffage (52) qui fait circuler l'eau du circuit de manière contrôlable aux points de consommation via le deuxième échangeur de chaleur (50) du circuit de chauffage, et le retour de l'eau de la chaleur urbaine du deuxième échangeur de chaleur (50) du circuit de chauffage est également connecté à l'échangeur de chaleur à plaques (10) pour l'eau domestique afin de préchauffer l'eau domestique au moyen du dispositif d'alimentation intermédiaire.

7. Procédé de transfert de la chaleur urbaine à un système de chauffage et à l'eau domestique, dans lequel un échangeur de chaleur à plaques pour l'eau domestique à deux parcours (10) pouvant être utilisé dans un dispositif d'alimentation intermédiaire est utilisé pour le transfert de chaleur, dans lequel l'échangeur de chaleur à plaques (10) a un premier côté (13) et un deuxième côté (14), et comprend une pile de plaques (16) formée par des plaques de transfert de chaleur (15) et au moins six orifices pour les raccordements de tuyaux à celle-ci :
- un orifice d'entrée de la chaleur urbaine (21),
- un orifice d'eau chaude (22),
- un orifice pour l'eau du circuit chaud (23),
- un orifice de retour de la chaleur urbaine (24),
- un orifice d'eau froide (25),
- un orifice d'alimentation intermédiaire (26),
et dans lequel l'eau provenant de l'orifice d'entrée de la chaleur urbaine (21) est acheminée dans un premier parcours dans le sens opposé à celui du flux de l'eau provenant de l'orifice pour l'eau du circuit chaud (23), après quoi l'eau de la chaleur urbaine est acheminée dans un second parcours dans un sens opposé à celui du flux de l'eau provenant de l'orifice d'eau froide (25), et dans lequel l'alimentation intermédiaire est effectuée via l'orifice d'alimentation intermédiaire (26) jusqu'à un point situé après le premier parcours,
dans lequel le flux d'alimentation intermédiaire est acheminé dans l'échangeur de chaleur à plaques (10) du côté opposé de la pile de plaques (16) par rapport à l'orifice d'eau chaude (23), et le flux d'alimentation intermédiaire ne libère de la chaleur pour l'eau domestique que sur le deuxième côté (14) de l'échangeur de chaleur à plaques (10).

8. Procédé conformément à la revendication 7,
**caractérisée en ce que** l'eau de la chaleur urbaine est acheminée dans l'orifice d'alimentation intermédiaire (26) depuis un échangeur de chaleur (40, 50) d'un circuit de chauffage à basse température, dans lequel l'échangeur de chaleur (40, 50) a une température de sortie comprise entre 25 °C et 40 °C pendant la majeure partie de la saison de chauffage.
